(19) Europäisches Patentamt
European Patent Office
Office européen des brevets

(11) **EP 1 956 671 A1**

(12) **EUROPEAN PATENT APPLICATION**

(43) Date of publication:
**13.08.2008 Bulletin 2008/33**

(51) Int Cl.:
***H01M 8/04*** *(2006.01)*      ***H01M 8/06*** *(2006.01)*

(21) Application number: **07425057.2**

(22) Date of filing: **02.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Electro Power Systems S.p.A.**
**10091 Alpignano (IT)**

(72) Inventors:
• **Cherchi, Pierpaolo**
**10141 Torino (IT)**

• **Borello, Luisa**
**10093 Collegno (IT)**
• **Musso, Andrea**
**10095 Grugliasco (IT)**
• **Gianolio, Giuseppe**
**14010 Cellarengo (IT)**
• **Rosso, Ilaria**
**10064 Pinerolo (IT)**

(74) Representative: **Jorio, Paolo**
**STUDIO TORTA S.r.l.**
**Via Viotti, 9**
**10121 Torino (IT)**

(54) **Fuel cell electric generator having an integrated metal hydride storage system**

(57) Hydrogen-fed fuel cell generator (1) having an integrated fuel storage in the shape of metal hydrides, comprising a stack (FC) of hydrogen-feedable fuel cells, a unit (MHU) for the storage of hydrogen in the shape of metal hydrides whose content is cyclically consumed by desorption and supply to the stack, and subsequently restored by absorption from a source of hydrogen; a cooling circuit (2) flown across by a thermo-carrier fluid and hydraulically provided in series with means (R) of dissipation of thermal energy carried by the thermo-carrier fluid, at least a first branch of which is hydraulically connected in series with the storage unit (MHU) so as to cool the latter during the absorption from the source of hydrogen. The electric generator further comprises means for hydraulically connecting in series the stack with at least a second branch (4) of the cooling circuit, so as to use the stack, when it is not operated to produce electric power, as second means of dissipation arranged in series with the first means of dissipation.

Figure 3

EP 1 956 671 A1

**Description**

The present invention refers to a fuel cell electric generator wherein a plurality of fuel cells are piled into a stack to generate electricity by being supplied a combustible gas and an oxidising gas, on a fuel electrode (anode) and an oxidation electrode (cathode) respectively.

In particular, the present invention refers to a fuel cell electric generator wherein the hydrogen to be fed to fuel cells is stored in the shape of metal hydrides.

Fuel cells represent one of the most technologically promising solutions for the use of hydrogen as an energy vector. They are devices capable of converting chemical energy into electric power, by taking advantage of an electrochemical reaction whose product is non polluting; e.g., in the case of hydrogen-supplied fuel cells, it is water.

The use of fuel cells is characterized by high efficiency, versatility and virtually null environmental impact.

Certain aspects of the present invention are particularly, but not exclusively, referred to a fuel cell electric generator which employs proton exchange membrane (PEM) cells and which utilises hydrogen as the fuel.

In a single PEM cell there take place simultaneously two hemi-reactions, at the anode and at the cathode respectively. Anode and cathode of a PEM fuel cell are separated by an electrolyte, typically consisting of a membrane of a sulphonated polymer capable of conducting protons, whose opposite sides are coated with a layer of a suitable catalytic mixture (e.g. Pt-based).

The electrolyte is generally saturated with a ionic transportation fluid (e.g. water) so that hydrogen ions can travel thereacross from anode to cathode.

At the anode, then, there is supplied hydrogen which diffuses within the catalytic layer and there dissociates into hydrogen ions and electrons, according to the hemi-reaction equation:

$$(1) \qquad 2H_2 \rightarrow 4H^+ + 4e^-$$

Electrons, to which the membrane is impermeable, travel along an external electric circuit towards the cathode, thereby generating an electric current and the corresponding voltage.

At the cathode there is supplied an oxidant, generally oxygen or a gaseous mixture containing oxygen (e.g. air) which reacts with the hydrogen ions which have travelled across the electrolyte and the electrons coming from the external electric circuit to form water, according to the hemi-reaction equation:

$$(2) \qquad O_2 + 4H^+ + 4e^- \rightarrow 2H_2O$$

This reaction is generally also catalytically assisted, e.g. by Pt.

The resulting overall reaction is consequently:

$$(3) \qquad 2H_2 + O_2 \rightarrow 2H_2O$$

which comes with the development of heat and electric power.

A well defined maximum voltage is associated with this electrochemical reaction. In order to achieve higher voltages, a plurality of elements are connected in series to form a stack. It is also possible to use different stacks connected in series.

A fuel cell electric generator of the above type needs a source of hydrogen; the latter is generally stored in pressurised vessels, or in the liquid form. Recently, as an alternative to conventional storage methodologies, there has been catching on the use of metal hydrides, which is advantageous because hydrogen can be stored at room temperature, in a smaller volume and at significantly lower pressures. Therefore, they constitute a safer and more compact storage form. Further, the hydrogen they release has high purity and it can be supplied directly to fuel cells.

The release of hydrogen is an endothermic reaction, according to the following equation:

$$(4) \qquad MH + heat \rightarrow M + H$$

wherein with M reference is made to a generic metal or metallic alloy, and therefore it demands a supply of energy in the shape of a thermal flow at a well defined temperature. On the other hand, the absorption of hydrogen is an exothermic phenomenon, therefore in the step of recharging a unit for the storage of hydrogen in the shape of metallic hydrides, heat must be removed from the above unit so as to favour absorption.

The amount of heat to supply and remove, during desorption and absorption respectively, depends upon the type of metallic alloy employed.

It is known to use the heat developed by the fuel cell stack to heat up the metal hydride storage unit to favour the release of hydrogen.

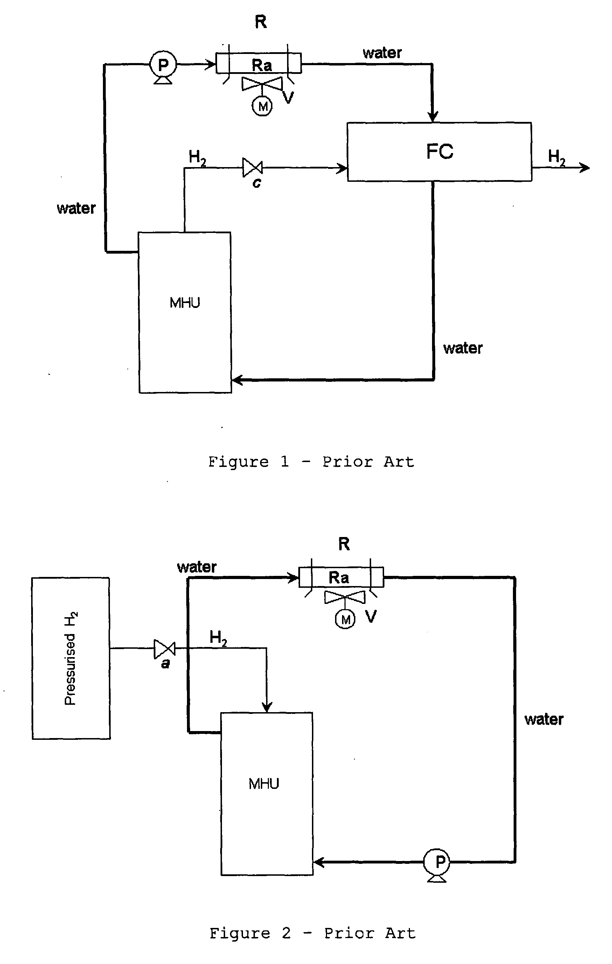

Figure 1 shows a schematic view describing the integration of the hydraulic circuit of the fuel cell stack (FC) and the metal hydride storage unit (MHU), whilst the stack FC is being operated, in a fuel cell electric generator according to the prior art. A hydrogen supply line also connects the MHU to the stack FC.

Hydrogen coming from the metal hydride unit is supplied to the stack FC while in operation. Stack FC, beside electric power, generates heat that is removed by means of a water cooling circuit so as to maintain the FC temperature approximately constant and comprised in the range 65÷85°C. The heat removed from the stack can be used to favour the release of hydrogen from the MHU. Therefore, water coming from the stack FC is sent to the MHU, wherein it yields to the metal hydrides the heat necessary to release hydrogen, so that the temperature of water is lowered. Next, water is sent back to the stack FC. In case the heat yielded to the MHU is not enough to balance the heat generated within the stack FC, there can be provided auxiliary means R of heat dissipation of a known type that may be used to remove the excess heat.

The ensemble of hydraulic circuit (pump, piping, dissipators, etc.), gaseous currents feed and discharge circuit (hydrogen feed piping, air feed piping, etc.), control system (control unit, temperature, flow and pressure gauges, actuators, etc.) constitute the remaining part of the fuel cell generator, to which reference will be made in the following as BoP (i.e. "Balance of Plant").

In order to cool the metal hydride storage unit during recharge, it is generally necessary that it be removed from the system and/or that a specific cooling system be provided, or however that the BoP of the system be conveniently modified.

Figure 2 shows a schematic view describing a possible mode of cooling the MHU during the recharge step, according to the prior art. From a source of pressurised hydrogen (e.g. a 200 bar cylinder) there is supplied hydrogen to the MHU. A flow of cold water, moved by means of a pump P, is sent to the MHU, from which it removes the heat developed whilst hydrogen is being absorbed. Next, it is sent to a dissipator R, optionally provided with a fan V, wherein it is cooled to be sent again to the MHU.

The removal of the storage unit for the recharge step is a lengthy and complex operation, which becomes particularly disadvantageous if such an operation needs to be repeated often. On the other hand, to provide for the possibility of modifying the BoP of the entire generator every time recharging the metal hydride storage unit becomes necessary involves a significant complication of the apparatus and higher costs.

It is an object of the present invention to provide a fuel cell electric generator with a metal hydride storage unit that can overcome the drawbacks described above. More particularly, it is an object of the present invention to provide a fuel cell electric generator wherein during the recharge step it is no longer necessary to remove the metal hydride storage unit, nor to modify the BoP of the system.

The invention therefore relates to a fuel cell electric generator according to claim 1.

In particular, according to the present invention, there is provided a fuel cell electric generator comprising:

- a stack of fuel cells that can be supplied with hydrogen;
- a unit for the storage of hydrogen in the shape of metal hydrides, the content of which is cyclically consumed through desorption and supply to the stack through a feed line, and subsequently restored through absorption from a source of hydrogen;
- a cooling circuit flown across by a thermo-carrier fluid and hydraulically provided in series with means of dissipation of thermal energy carried by the thermo-carrier fluid, at least a first branch of which is hydraulically connected in series with the storage unit so as to cool the latter during the absorption from the source of hydrogen; and
- means for hydraulically connecting in series the stack with at least a second branch of the cooling circuit, so as to use the stack, when it is not operated to produce electric power, as second means of dissipation arranged in series with the first means of dissipation.

According to another aspect of the present invention, there is provided a method of managing an electric generator of the type comprising a unit for the storage of hydrogen in the shape of metal hydrides and a stack of fuel cells supplied with the hydrogen of the storage unit, comprising:

- a step of producing electric power through the stack, by supplying the stack in a controlled manner a flow of hydrogen from the storage unit;

- during the step of producing electric power, a step of cooling the stack consisting of circulating a thermo-carrier fluid in a hydraulic circuit which crosses the stack and which is hydraulically connected in series to the storage unit, so as to heat up the latter and cause a release of hydrogen for the generation of said controlled flow of hydrogen;
- a step of recharging the storage unit when the stack is not operated to produce electric power and during which the content in hydrogen of the storage unit is restored through absorption from an external source of pressurised hydrogen; characterised in that said recharge step is performed through the steps of:

- connecting said external source of pressurised hydrogen to said storage unit without removing the latter from the electric generator; and
- circulating said thermo-carrier fluid in said hydraulic circuit through a first branch of the circuit and through the stack (FC) through a second branch of the hydraulic circuit, so as to subtract thermal energy from said storage unit and to dissipate it at least partly in said stack (FC).

During said recharge step the thermo-carrier fluid is advantageously circulated also through means of dissipation of thermal energy arranged in series along said hydraulic circuit immediately upstream or downstream with respect to the stack, with reference to a circulation direction of said thermo-carrier fluid in said hydraulic circuit.

Further characteristics and advantages of the present invention will become apparent from the following description of an embodiment thereof given with reference to the figures of the attached drawings, wherein:

Figure 1 is a schematic view showing a stack of fuel cells and its metal hydride storage unit whilst the FC is being operated, in a fuel cell electric generator according to the prior art;
Figure 2 is a schematic view showing one possible mode of cooling the metal hydride storage unit of a fuel cell generator according to the prior art during the recharge step;
Figure 3 is a schematic view showing the flow of a thermo-carrier fluid during the step of recharging the storage unit according to the method of managing the fuel cell electric generator of the present invention; Figure 4 is a schematic view showing the general lay-out of a fuel cell electric generator manufactured according to the present invention; and
Figure 5 is a schematic view showing the general lay-out of a further embodiment of a fuel cell electric generator according to the present invention.

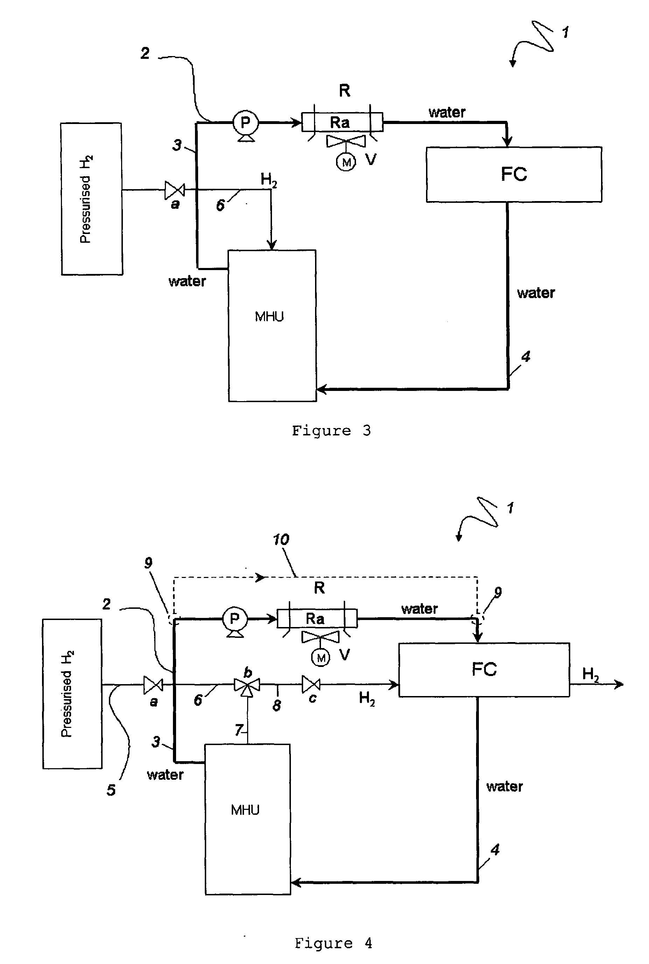

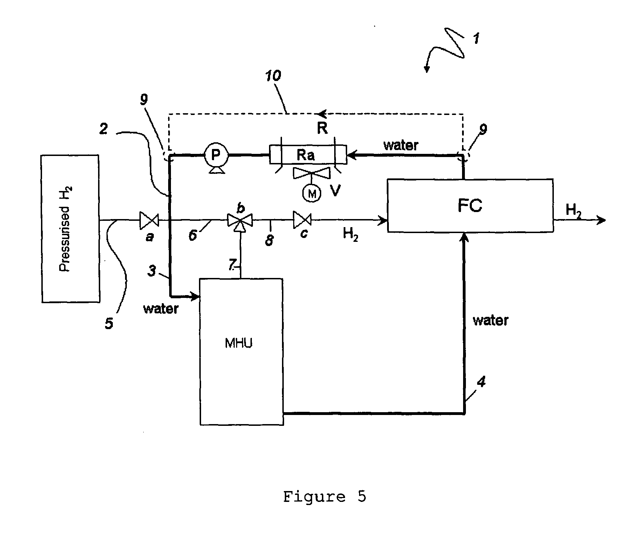

With reference to figures 3, 4 and 5 there is indicated in its entirety with 1 a fuel cell electric generator comprising a stack FC that can be fed with hydrogen and a metal hydride storage unit MHU connected by a hydraulic circuit 2 for the circulation, in the way that will be described, of a thermo-carrier fluid between the stack FC and the storage unit MHU, of which in figures 4 and 5 there is shown the whole lay-out and in figure 3 only that relative to the circulation of the above mentioned thermo-carrier fluid during a recharge step of the storage unit MHU.

According to the present invention, the hydraulic circuit 2 comprises: a first branch 3 hydraulically connecting in series first means R of dissipation of thermal energy, of a known type (e.g. a radiator Ra, optionally provided with a fan V driver by an engine M) to the storage unit, in the following referred to for the sake of conciseness by means of its acronym MHU; and a second branch 4, which connects hydraulically in series the MHU to the stack FC (in the following for the sake of conciseness also referred to only by means of its acronym FC) and to the first means of dissipation R.

In the following, the terms "upstream" and "downstream" are to be intended as preferred to the direction of circulation of the thermo-carrier fluid in the hydraulic circuit 2, indicated by the arrows in figures 3, 4 and 5.

The thermo-carrier fluid generally consists of water. During the step of recharging the MHU, shown in figure 3, water is supplied to the MHU and it exits the latter heated by the heat developed in the MHU by the hydrogen absorption (which is, e.g. of the order of 100 W every 150 l of hydrogen absorbed/desorbed). Subsequently, water is sent, in series, to first means R of dissipation of thermal energy and to the stack FC. Thus yields the heat accumulated to the first means R of dissipation and to the stack FC, thereby cooling down. The initial temperature of water is thus substantially restored, so that it can supplied back to the MHU for the cooling thereof. In this step, therefore, the stack FC which is not operating to produce electric power is used as a set of means of dissipation of thermal energy, in aid of the dissipation means R.

Advantageously, it is thus possible to maintain the stack FC at temperature values higher than room temperature and close to the operating ones. Once the recharge step is over, the reactivation of the stack FC can take place more quickly because it is at a temperature close to the optimum temperature. Thus, it is therefore possible to carry out a more advantageous and efficient energetic integration of the system.

According to a preferred embodiment of the present invention, the hydraulic circuits described with reference to Figure 1 and according to the present invention (Figure 3) can be incorporated into a single integrated hydraulic circuit schematically shown in Figures 4 and 5. Pump P may be arranged, for example, on branch 3, or in a different position as well.

During the step of operating the stack FC to produce electric power, water (the thermo-carrier fluid) moved by pump P travels across the stack FC to cool it, then (Figures 3 and 5) it is directed to the MHU, to which it yields heat to favour hydrogen desorption. Finally, water is directed towards the dissipation means R to subsequently go back to the stack FC.

When the MHU has to be recharged, a source of pressurised hydrogen (e.g. a cylinder containing hydrogen at 200 bar), otherwise absent, is first connected to the system through pressure reducing valve a. Three-way valve b, which, during a step of operating the stack FC to produce electric power, is activated so as to hydraulically connect the MHU to the stack FC through a branch 8 of the hydrogen circuit 5, in the recharge step is activated to direct hydrogen from the source of pressurised hydrogen to the MHU, through branches 6 and 7, thereby preventing it at the same time from flowing towards the stack FC.

According to the first embodiment of the present invention (figure 4), water, moved by the head of pump P, travels across the MHU, from which it removes the heat released by hydrogen absorption; water is then directed towards the radiator Ra optionally provided with fan V, and into stack F. The heat released by the hydrogen absorption, according to what described, can be dissipated partly through heat yield to the stack, wherein fuel cells, inactivated in this step, act as means of heat dissipation, and partly through the dissipation means R.

According to a distinct embodiment of the present invention (Figure 5), the stack FC is arranged upstream with respect to the first dissipation means R, which are in their turn arranged upstream with respect to the MHU.

It is thus possible to not remove the MHU from the system during the recharge step, which remarkably simplifies the procedure and reduces times required for the operation. Further, since water that has removed the heat generated by the hydrogen absorption within the MHU, yields that heat partly to the stack FC, it proves easy to keep the stack FC at temperatures close to those optimal for its operation, which will resume once the MHU recharge is completed.

Further, the thermal load to be dissipated through the first means R of dissipation proves to be reduced. Consequently, in case the first means of dissipation comprise a radiator provided with a fan, the resort to the use of the fan will be less frequent, and there will be consequently a reduction of energy consumption.

A further advantage is that, since part of the thermal load is dissipated through the stack FC, a dissipator with a smaller exchange surface, and therefore, in general, of a smaller size, may be sufficient, which can result in a reduction of costs and in the possibility of manufacturing a more compact fuel cell electric generator.

According to a further embodiment of the present invention (dotted line in Figures 4 and 5) there can be provided valve means 9 suitable for hydraulically, selectively and adjustably connecting branches 3 and 4 of the hydraulic circuit with a bypass branch 10, running substantially alongside dissipation means R, thereby bypassing them. It is therefore possible, through the activation of the valve means 9 suitably operated by a control system (obvious for the person skilled in the art and therefore not shown), to send a first portion of the flow of water to the dissipation means R and the remaining portion of the flow of water in the bypass branch 10. Thus, there can be adjusted even more efficiently the temperature of water so as to satisfy the thermal balance of the system.

**Claims**

1. Hydrogen-feedable fuel cell electric generator (1) having an integrated system of fuel storage in the shape of metal hydrides, comprising:

   - a stack (FC) of hydrogen-feedable fuel cells;
   - a unit for the storage of hydrogen (MHU) in the shape of metal hydrides, the content of which is cyclically consumed through desorption and supply to the stack through a feed line, and subsequently restored through absorption from a source of hydrogen;
   - a cooling circuit (2) flown across by a thermo-carrier fluid and hydraulically provided in series with means (R) of dissipation of thermal energy carried by the thermo-carrier fluid, at least a first branch (3) of which is hydraulically connected in series with the storage unit (MHU) so as to cool the latter during the absorption from the source of hydrogen;

   **characterised in that** it further comprises means for hydraulically connecting in series said stack with at least a second branch (4) of said cooling circuit, so as to use said stack, when it is not operated to produce electric power, as second means of dissipation arranged in series with the first means of dissipation.

2. Electric generator (1) according to claim 1, **characterised in that** said first means (R) of dissipation comprise a radiator (Ra) and a fan (V).

3. Electric generator (1) according to any of the foregoing claims, **characterised in that** said fuel cells are of the proton-exchange membrane (PEM) type.

**4.** Electric generator (1) according to any of the foregoing claims, **characterised in that**, with respect to the direction of circulation of the thermo-carrier fluid, said stack FC is arranged upstream with respect to the first means of dissipation, which in their turn are arranged upstream with respect to the MHU unit.

**5.** Electric generator (1) according to any of claims 1-3, **characterised in that**, with respect to the direction of circulation of the thermo-carrier fluid, said stack FC is arranged downstream with respect to the first means of dissipation, which in their turn are arranged downstream with respect to the MHU unit.

**6.** Electric generator (1) according to any of the foregoing claims, **characterised in that** it comprises a hydrogen recharge line to which a source of pressurised hydrogen can be connected by means of a pressure reducing valve *(a),* said line being connected to a three-way valve (b) through which the storage unit MHU is hydraulically connectable in series, selectively, to said pressure reducing valve (a) and to said stack (FC).

**7.** A method of managing a fuel cell electric generator of the type comprising a unit (MHU) for the storage of hydrogen in the shape of metal hydrides and a stack (FC) of fuel cells fed by the hydrogen of the storage unit, comprising:

- a step of producing electric power through the stack (FC), by supplying the stack in a controlled manner a controlled flow of hydrogen from the storage unit (MHU);
- during the step of producing electric power, a step of cooling the stack (FC) consisting of circulating a thermo-carrier fluid in a hydraulic circuit which crosses the stack and which is hydraulically connected in series to the storage unit(MHU), so as to heat up the latter and cause a release of hydrogen for the generation of said controlled flow of hydrogen;
- a step of recharging the storage unit (MHU) when the stack (FC) is not operated to produce electric power and during which the content in hydrogen of the storage unit (MHU) is restored through absorption from an external source of pressurised hydrogen;

**characterised in that** said recharge step is performed through the steps of:

- connecting said external source of pressurised hydrogen to said storage unit without removing the latter from the electric generator; and
- circulating said thermo-carrier fluid in said hydraulic circuit through a first branch of the circuit and through said stack (FC) through a second branch of said hydraulic circuit, so as to subtract thermal energy from said storage unit and to dissipate it at least partly in said stack (FC).

**8.** A method according to claim 7, **characterised in that** during said recharging step said thermo-carrier fluid is circulated also through means of dissipation of thermal energy arranged in series along said hydraulic circuit immediately downstream with respect to said stack (FC), with reference to a circulation direction of said thermo-carrier fluid in said hydraulic circuit.

**9.** A method according to claim 7, **characterised in that** during said recharging step said thermo-carrier fluid is circulated also through means of dissipation of thermal energy arranged in series along said hydraulic circuit immediately upstream with respect to said stack (FC), with reference to a circulation direction of said thermo-carrier fluid in said hydraulic circuit.

**10.** A method according to any of claims 7 to 9, **characterised in that** said means of dissipation consist of a radiator (Ra) optionally provided with a fan (V).

Figure 1 - Prior Art

Figure 2 - Prior Art

Figure 3

Figure 4

Figure 5

European Patent
Office

**EUROPEAN SEARCH REPORT**

Application Number

EP 07 42 5057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/130002 A1 (KURIIWA TAKAHIRO [JP] ET AL) 16 June 2005 (2005-06-16) <br> * paragraph [0052] - paragraph [0067]; figure 5 * <br> * paragraph [0080] - paragraph [0088] * | 1,3,5-7, 9 | INV. <br> H01M8/04 <br> H01M8/06 |
| Y | | 4,8,10 | |
| X | US 6 195 999 B1 (ARNOLD GERD [DE] ET AL) 6 March 2001 (2001-03-06) <br> * column 1, line 35 - column 4, line 63; figure 1 * <br> * column 6, line 5 - line 10 * | 1,5,7,9 | |
| Y | | 4,8,10 | |
| X | EP 1 284 515 A (ASIA PACIFIC FUEL CELL TECH [TW]) 19 February 2003 (2003-02-19) <br> * paragraph [0003] * <br> * paragraph [0014]; figure 2 * <br> * paragraph [0019] * | 1-3,5 | |
| Y | | 10 | TECHNICAL FIELDS SEARCHED (IPC) |
| X | WO 00/63993 A (ZSW [DE]; ROHLAND BERND [DE]; SCHOLTA JOACHIM [DE]; JOERISSEN LUDWIG [ ]) 26 October 2000 (2000-10-26) <br> * page 2, line 10 - line 30 * <br> * page 3, line 5 - line 12 * <br> * page 5, line 15 - page 6, line 1; figure 1 * | 1,3 | H01M |
| Y | | 4,8 | |

The present search report has been drawn up for all claims

| Place of search | Date of completion of the search | Examiner |
|---|---|---|
| Munich | 18 July 2007 | Goldbacher, Ute |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .....................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 42 5057

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2007

| Patent document cited in search report | | Publication date | Patent family member(s) | | Publication date |
|---|---|---|---|---|---|
| US 2005130002 | A1 | 16-06-2005 | JP | 3883125 B2 | 21-02-2007 |
| | | | JP | 2005174724 A | 30-06-2005 |
| US 6195999 | B1 | 06-03-2001 | CA | 2323117 A1 | 06-07-2001 |
| | | | EP | 1115169 A2 | 11-07-2001 |
| | | | JP | 2001250571 A | 14-09-2001 |
| EP 1284515 | A | 19-02-2003 | CN | 1405911 A | 26-03-2003 |
| WO 0063993 | A | 26-10-2000 | AT | 235108 T | 15-04-2003 |
| | | | EP | 1175707 A1 | 30-01-2002 |

EPO FORM P0459

For more details about this annex : see Official Journal of the European Patent Office, No. 12/82